# EUROPEAN PATENT SPECIFICATION

(11) **EP 0 337 807 B1**
(45) Date of publication and mention of the grant of the patent: **17.03.1993**
(21) Application number: 89303727.5
(22) Date of filing: 14.04.1989
(51) Int. Cl.: B23Q 3/157

(54) **Automatic tool changer**
Automatischer Werkzeugwechsler
Echangeur d'outils automatique

(30) Priority: 15.04.1988 JP 93867/88; 12.09.1988 JP 228092/88
(43) Date of publication of application: 18.10.1989
(73) Proprietor: KABUSHIKI KAISHA MORI SEIKI SEISAKUSHO, Yamatokoriyamashi Nara (JP)
(72) Inventor: Yamaguchi, Yoshinori Research Centre, Yamatokoriyamaschi Nara (JP); Kubota, Masahiro Research Centre, Yamatokoriyamaschi Nara (JP); Nakaminami, Masamitsu Research Centre, Yamatokoriyamaschi Nara (JP)
(74) Representative: Purvis, William Michael Cameron

(56) References cited:
- DE-A- 2 312 827
- GB-A- 1 286 702
- US-A- 3 750 729
- PATENT ABSTRACTS OF JAPAN vol. 12, no. 1 (M-656)(2848) 06 January 1988, & JP-A-62 166936 (HIROMASA KITAGUCHI) 23 July 1987,

## Description

The invention relates to an automatic tool changer.

Such an automatic tool changer can be used in automatic machine tools such as NC machinery to exchange a used tool on a spindle with a fresh one.

It has been previously proposed to employ an automatic tool changer for NC machinery so as to avoid disrupting the operation when a used tool on the main spindle is exchanged for a fresh tool stored in a magazine. Such previously proposed tool changers have a fairly complicated mechanism, which includes a tool carrying arm for shifting the fresh tool from the magazine to an changer head, which then carries and mounts it on the main spindle.

The tool carrying arm requires a relatively large space for itself and related components to work in. This increases the sizes and prices of the tool changers.

In addition, a difficulty is involved in locating the tool carrying arm exactly at a position where the tools are exchanged. The location work is time-consuming. In trying to finish the location work in a short period of time, the precision is often sacrificed. In tapping, for example, a hole is preformed by a drill which is the used tool and the fresh tool is a tap. The positions of the drill and the tap are the same with respect to the workpiece. However, in order to avoid colliding with the workpiece the drill is shifted to a position where it is exchanged with the tap. After the drill is exchanged with the tap, the tap is shifted to a working position. In this way the known tool changers require the travel of the tool carrying arm, which consumes time. The mechanical movements generate frictional heat in the feed screws, and wear the part members employed in the tool exchange. The tool exchange is a highly sophisticated operation. Even minor inadequacy leads to imprecise location of the fresh tool. If the tool exchange takes a long time, it is particularly disadvantageous when a routine work is done with a small tool. The tool exchange should be finished as soon as possible.

DE-A-2312827 discloses a tool changer comprising a hollow main spindle having a chuck at one end; a plurality of tools; and means for pushing the tools within the hollow spindle towards the chuck thereby to change the working tool. In the apparatus of DE-A-2312827, the spare tools are accommodated in a magazine spaced from the spindle.

According to one aspect of the invention there is provided an automatic tool changer for exchanging one tool with another, the tool changer comprising:
a main spindle having an internal bore;
a chuck provided at an open end of the main spindle;
a plurality of tools; and
means for pushing the tools toward the open end of the main spindle, characterised in that the tools are accommodated in the bore of the main spindle with the tools individually slidable axially of the main spindle, whereby the means for pushing is operable to replace a first tool in the chuck with a second tool accommodated in the bore of the main spindle.

Preferably the hollow main spindle is rotatably mounted in a main spindle head;
a cylindrical tool magazine is inserted into the hollow main spindle whereby the tool magazine is accommodated in the main spindle head;
the chuck includes a cylindrical tool holder and means for guiding a tool to the tool holder;
the tools have shanks of the same shape accommodated in the cylindrical tool magazine with the tools equally spaced around the periphery thereof and individually slidable axially of the magazine; and
the tool changer includes a tool shifting means disposed in the tool magazine, the tool shifting means being effective to move a used tool rearwardly from the tool holder to the tool magazine and to move a replacing tool forwardly from the tool magazine until a tip of the tool protrudes through the tool holder by a predetermined length.

Such an automatic tool changer can be capable of exchanging one tool for another in a short period of time.

The automatic tool changer can be capable of locating a replacing tool at an exact position with respect to a workpiece.

The invention is diagrammatically illustrated by way of example in the accompanying drawings, in which:-
Figure 1 is a perspective view showing a state in which an automatic tool changer according to the invention is loaded in an NC machine tool;
Figure 2 is a partly sectioned front view showing the tool changer of Figure 1;
Figures 3 and 4 are cross-sectional views to an enlarged scale respectively showing a main part of the tool changer of Figures 1 and 2;
Figure 5 is a cross-section taken on line 5-5 in Figure 3;
Figure 6 is a cross-section taken on line 6-6 in Figure 3;
Figure 7 is a cross-sectional view showing a modification of an automatic tool changer according to the invention; and
Figure 8 is a cross-sectional view showing a further modified embodiment of an automatic tool changer according to the invention.

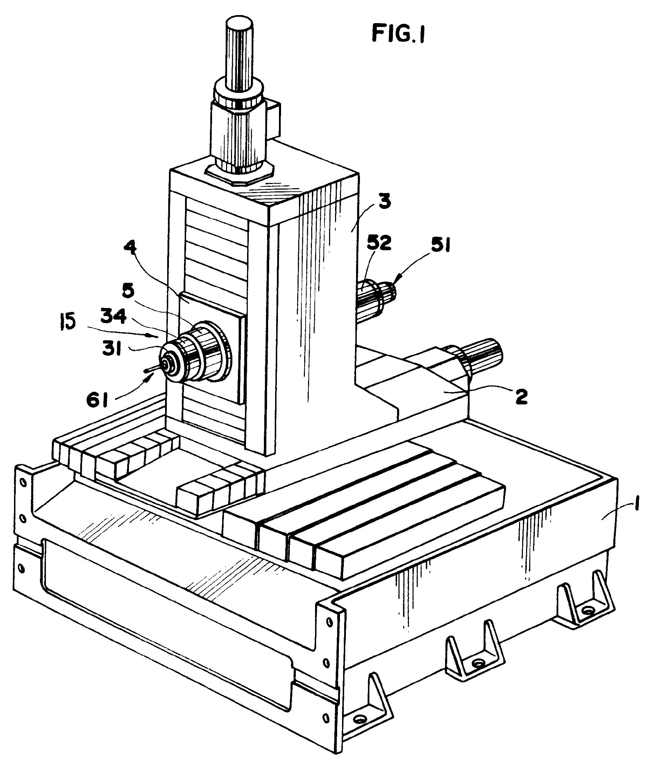

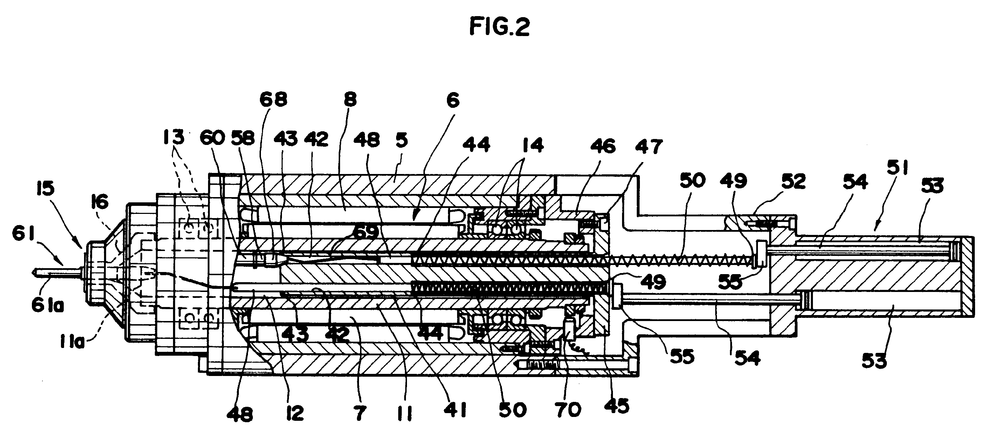

Referring firstly to Figure 1, an NC machine tool incorporating an example of an automatic tool changer according to the invention includes a bed 1, a carriage 2 movable longitudinally of the bed 1, a column 3 movable laterally of the bed 1, a headstock 4 slidably mounted on the column 3, and a main spindle head 5 fixed to the headstock 4 and, as shown in Figure 2 formed as a hollow cylinder. The main spindle head 5 includes a spindle motor 6.

The main spindle head 5 carries a main spindle 11 which has a bore 12 and is mounted in bearings 13 and 14. The main spindle 11 is integrally surrounded by a rotor 7 of the spindle motor 6 for effecting unitary motion of the spindle 11 and the rotor 7. The motor 6 has a stator 8 fixed to the main spindle head 5.

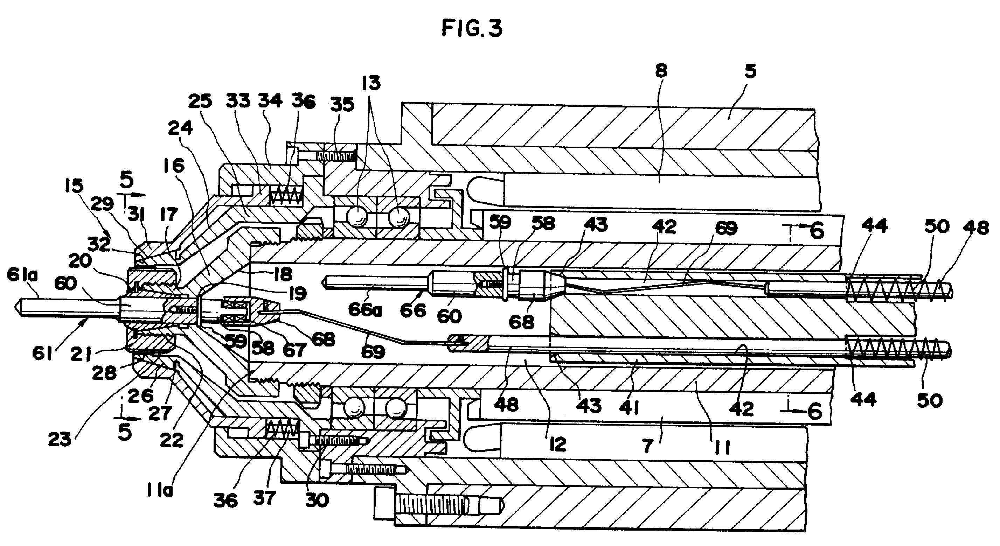

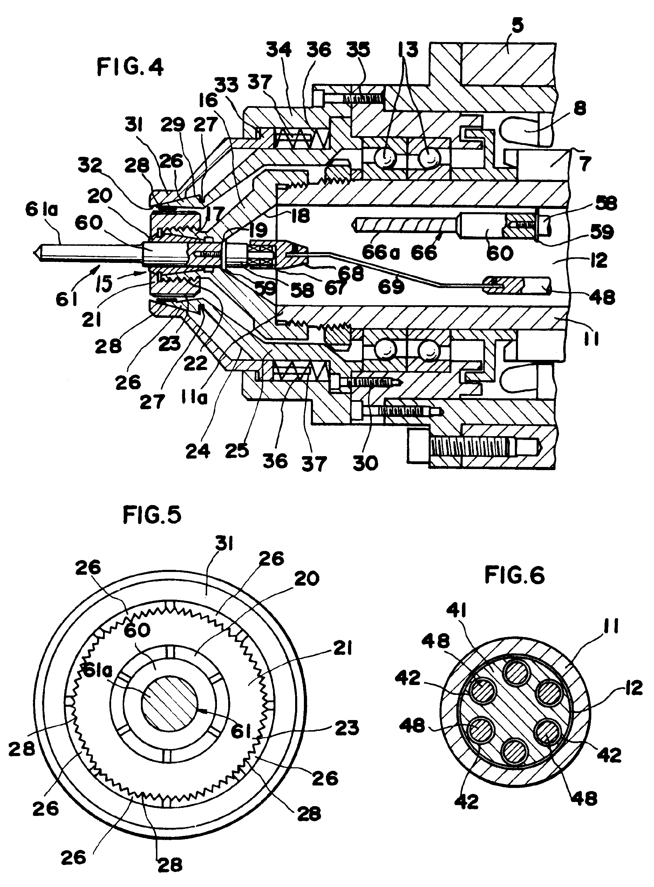

There is provided a collet chuck 15, which includes a chuck member 16 engaged over one end 11a of the main spindle 11. As best shown in Figure 3 and 4, the chuck member 16 includes a cylindrical tool holder 17 for gripping a tool, a taper-walled aperture 18 for facilitating movement of a replacing tool, and an abutment 19 which prevents the replacing tool from extruding outwardly excessively. A first collet 20 fits a tapering aperture in the tool holder 17. A tool is secured in the tool holder 17 by a nut 21, which screws onto a threaded portion 22 of the tool holder 17. The nut 21 is provided with serrations 23 axially cut in its periphery.

A second collet 24 secures the nut 21 to the tool holder 17. The second collet 24 includes a cylindrical portion 25, eight split ribs 26 and a ring-shaped recess 27 cut at root portions of the split ribs 26. Each rib 26 is provided with serrations 28 engageable with the serrations 23 on the nut 21. The second collet 24 has a taper surface 29, and has its cylindrical portion 25 fixed on the main spindle head 5 by screws 30. The ring-shaped recess 27 provides resiliency for the split ribs 26. The second collet 24 is fixedly pressed against the nut 21 by a ring 31 which has a tapered wall 32 kept in contact with a taper surface of the split rib 26. The ring 31 includes a piston portion 33 which is disposed between the cylindrical portion 25 of the second collet 24 and an inner wall of a cylinder 34 fixed to the main spindle head 5 by screws 35. The piston portion 33 is normally biased forward by a spring 36. When the piston portion 33 is pushed forward by the spring 36, the split ribs 26 are released from the nut 21 (Figure 4).

When the piston portion 33 is moved backward against the spring 36 by hydraulic or pneumatic pressure, the split ribs 26 are tightened by the ring 31 as shown in Figures 3 and 5. As a result, the serrations 23 and 28 of the nut 21 and the split-ribs 26 respectively come into engagement, thereby preventing the nut 21 from rotating such that it is movable in an axial direction. The piston portion 33 is provided with a stop pin 37 whereby a possible excessive tightening-up of the split ribs 26 is prevented.

Tools are retained in a cylindrical magazine 41, which includes a plurality of bores 42 (the illustrated embodiment has six bores) disposed at equal intervals around its periphery. Each bore 42 diverges at an entry end 43 in which a tool is held, and is provided with an annular shoulder 44 at its other, rear end, which receives a spring 50. The magazine 41 is mounted by means of a flange 45.

The magazine 41 is releasably inserted into the bore 12 of the main spindle 11, and the flange 45 is fastened to the main spindle head 5 through a cover 46 by means of bolts 47. Guide rods 48 are slidably guided in the guide bores 42 of the magazine 41. Each guide bore 42 is stepped at its shoulder 44, and each slide rod 48 is provided with a flange 49 at its rear end. The respective spring 50 inserted between the shoulder 44 and the flange 49 normally biases each slide rod 48 rearwardly.

A cylindrical housing 51 accommodates a number of pneumatic cylinders 53 corresponding to the number of slide rods 48, the pneumatic cylinders having piston rods 54 equipped with pushers 55 at their front ends. The piston rods 54 push the slide rods 48 forward against the force of the springs 50.

The tool magazine 41 contains a plurality of tools 61 to 66, each of which has a shank 60 of the same configuration but a unique working tip. For tapping use, for example, working tips comprising a centering drill 61a, a drill, a countersink and a tap will be used in succession.

Each tool 61 to 66 is releasably fixed to a shank holder 58 having a flange 59 in a known manner such as by a threaded connection method. As mentioned above, the shanks 60 of the tools 61 to 66 are of the same configuration, which allows the shank holders 58 to have the same configuration. Each shank holder 58 is rotatively connected to a coupler 68 through bearings 67, and the flange 59 comes into engagement with the abutment 19 of the chuck 16, thereby positioning the tool at its working position.

Each tool 61 to 66 is connected to its slide rod 48 by means of a wire 69 which is secured to the coupler 68 at one end, and to the slide rod 48 at the other end.

When the slide rod 48 is fully withdrawn, the wire 69 is pulled into the bore 42 until the coupler 68 comes into abutment with the entry end 43 of the bore 42. When one of the slide rods 48 is fully protruded through the bore 42, the respective tool individually protrudes until its tip emerges through the collet 20 by predetermined lengths. At this stage the collet 20 holds the shank 60 of the respective tool. Then the main spindle 11 is driven to enable the tool to effect its work as a drill, a countersink, or a tap. While one of the tools is working, the piston portions 33 are in a forward position due to the action of the springs 36, thereby relaxing the split ribs 26 to allow the nut 21 to be free therefrom.

As shown in Figure 2 there is provided a sensor 70 which measures rotation of the main spindle 11. In tapping, for example, the sensor 70 is helpful in synchronizing the rotation of the main spindle 11 with the speed of feed thereof.

An example of the operation will be described:
In Figure 3 a tool 61 is a used tool which has finished its work, and a tool 66 is a fresh tool to replace the tool 61. At this stage the cylinder 34 is supplied with pneumatic or hydraulic pressure, thereby enabling the piston portion 33 to withdraw against the force of the springs 36. The ring 31 progressively tightens up the split ribs 26 of the second collet 24 in accordance with the movement of the piston portion 33, thereby causing the serrations 28 of the split ribs 26 to engage the serrations 23 of the nut 21 (Figure 5). The stop pin 37 works a safety device whereby the ring 31 is prevented from tightening the split ribs 26 excessively. In this way the nut 21 is prevented from rotating but is movable in the axial direction. The piston rods 54 of the pneumatic cylinders 53 are withdrawn rearward.

Then, the main spindle 11 is reversely rotated at low speed (in a clockwise direction when viewed from the left-hand side in Figure 3), thereby enabling the nut 21 to be loosened on the chuck 16. Thus the nut 21 is caused to move axially and release the collet 20, thereby setting the used tool 61 free from the collet 20 and allowing it to be withdrawn into the guide bore 42 under the action of the respective spring 50 and the wire 69 until it rests on the entry end 43 of its respective guide bore 42. The main spindle 11 is then stopped.

In response to the stoppage of the main spindle 11, the next step starts with energizing of the respective pneumatic cylinder 53 to move the slide rod 48 of the tool 66 forward. The fresh tool 66 is pushed out of the entry end 43 by the respective slide rod 48 and the wire 69, and is passed through the tool holder 17 guided by the taper-walled aperture 18. The tool 66 stops when its tip 66a protrudes through the collet 20 to a predetermined length. At this stage the main spindle 11 is rotated in a counter-clockwise direction when viewed from the left-hand side in Figure 3, thereby causing the nut 21 to be tightened, i.e. to move axially so as to tighten up the collet 20. The tool 66 is thus gripped by the collet 20.

When the tool 66 is gripped by the collet 20, the pneumatic or hydraulic pressure is evacuated from the cylinder 34, and the piston portion 33 is moved forwardly by the spring 36 to the position shown in Figure 4, thereby enabling the ring 31 to release the split ribs 26. The split ribs 26 are elastically deformed outwardly within the ring-shaped recess 27, thereby releasing them from the nut 21 so that the serrations 23 and 28 are disengaged from each other.

Then the main spindle 11 can be rotated at high speed to drive the tool 66 so as to enable it to perform its own function. The wire 69 and the slide rod 48 remain stationary despite their connection to the tool 66 because of the presence of the bearings 67. The other tools 61 to 65 also remain stationary.

The procedure is repeated for successive tools.

In the illustrated embodiment the return spring 50 and the cylinders are used to shift the tools but other suitable means can be used.

It is possible to accommodate the tools 61 to 66 in the tool magazine 41, the wires 69, the slide rods 48, the return springs 50 and the cylindrical housing 51 in a cassette, which can be housed in the bore 12 of the main spindle.

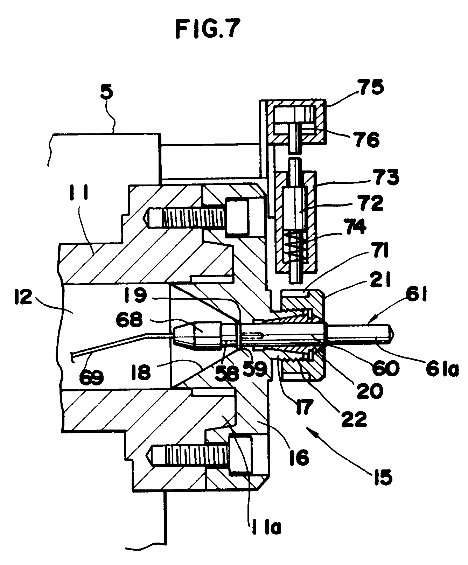

Referring to Figure 7, in a modified version the nut 21 is provided with recesses 71 equally spaced around its periphery and capable of receiving a stop pin 72, thereby to prevent the nut 21 from following the rotation of the main spindle 11.

The stop pin 72 is housed in a housing 73 provided in the main spindle head 5 such that it is normally kept away from the nut 21 by a spring 74. A pneumatic cylinder 75 has a piston rod 76 which can abut the stop pin 72 to cause it to project toward the nut 21 against the force of the spring 74. The stop pin 72 can engage any of the recesses 71 thereby to stop the nut 21 from rotation as described above while leaving the nut 21 remaining movable in the axial direction. In this condition the main spindle 11 can be rotated at low speed in a clockwise or counter-clockwise direction, thereby tightening or untightening the nut 21.

The chuck provided in the opening 11a of the main spindle 11 is not limited to the collet chuck 15 specified above but can be substituted by various kinds of chucks.

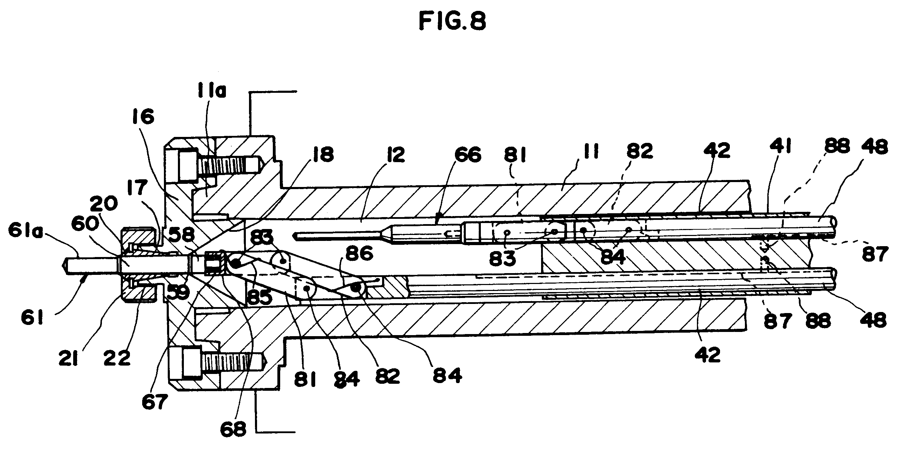

Figure 8 shows an example employing a crank unit which includes a pair of links 81 and 82 which are respectively connected to the coupler 68 by pivots 83 at one end, and connected to the slide rod 48 by pivots 84 at the other end. When the tool is withdrawn to an inoperative position, the slide rod 48, the links 81, 82, the coupler 68 and the tool are coaxially aligned. When the tool is pushed toward its operation position by the slide rod 48, the links 81 and 82 are rotated in a clockwise direction as viewed in Figure 8, thereby enabling the tool to shift on to the axis of the main spindle 11 against springs 85 and 86. Each slide rod 48 is provided with a groove 87, which receives a stop pin 88 so as to prevent the slide rod 48 from rotating though it remains movable axially with respect to the main spindle 11. The arrangement of Figure 8 ensures that the tool is shifted in parallel with the axis of the main spindle 11.

As is evident from the foregoing description, one of the advantages is that the tool exchange can be carried out instantly without having intermediate movements of a tool carrying arm and its related part members. Another advantage is that it is not necessary to position the main spindle and the tool exchange arm at a place where the tool exchange takes place, thereby ensuring the precise location of a fresh tool. The tool changer can be a compact size because the main spindle can accommodate all the tools within its inner bore, thereby eliminating the necessity of preparing an accommodation space around the main spindle. All the tools and related part members can be accommodated in a cassette. The cassette system can facilitate replacement of tools.

## Claims

1. An automatic tool changer for exchanging one tool (61) with another (66), the tool changer comprising:
a main spindle (11) having an internal bore (12);
a chuck (15) provided at an open end (11a) of the main spindle (11);
a plurality of tools (61 to 66);
means for pushing the tools toward the open end of the main spindle,
characterised in that the tools are accommodated in the bore (12) of the main spindle (11) with the tools (61 to 66) individually slidable axially of the main spindle (11), whereby the means for pushing is operable to replace a first tool (61) in the chuck (15) with a second tool (66) accommodated in the bore (12) of the main spindle (11).

2. An automatic tool changer according to claim 1 characterised in that:
the hollow main spindle (11) is rotatably mounted in a main spindle head (5);
a cylindrical tool magazine (41) is inserted into the hollow main spindle (11) whereby the tool magazine (41) is accommodated in the main spindle head (5);
the chuck (15) includes a cylindrical tool holder (17) and means for guiding a tool to the tool holder (17);
the tools (61 to 66) have shanks (60) of the same shape accommodated in the cylindrical tool magazine (41) with the tools (61 to 66) equally spaced around the periphery thereof and individually slidable axially of the magazine (41); and
the tool changer includes a tool shifting means (48 to 55) disposed in the tool magazine, the tool shifting means being effective to move a used tool (61) rearwardly from the tool holder (17) to the tool magazine (41) and to move a replacing tool (66) forwardly from the tool magazine (41) until the tip (66a) of the tool protrudes through the tool holder (17) by a predetermined length.

3. An automatic tool changer according to claim 2, wherein the tool shifting means comprises slide rods (48) slidably disposed in individual guide bores (42) extending axially in the tool magazine (41), wires (69) connecting the rear ends of the individual tools (61 to 66) to the forward ends of the slide rods (48) with the wires (69) and the tool (61 to 66) relatively rotatable by bearings (67), return springs (50) for withdrawing the slide rods (48) to rearward positions, and means (54) for pushing each slide rod (48) forwardly against the respective return spring (50) to cause the replacing tool to move to a position where it is held by the chuck (15).

4. An automatic tool changer according to claim 3, wherein the tool shifting means includes slide rods (48) slidably disposed in individual guide bores (42) extending axially in the tool magazine (41) and wherein parallel links (81, 82) are provided connecting the individual tools to the slide rods (48).

5. An automatic tool changer according to any one of claims 2 to 4, wherein the chuck (15) is a collet chuck tightened or untightened by a nut (21) and the nut (21) can be prevented from rotating by fixing means (23, 28 or 71, 72) disposed at the main spindle head (5) while still being movable axially.

6. An automatic tool changer according to any one of claims 2 to 5, wherein the plurality of tools accommodated in the tool magazine (41) are contained in a cassette together with the tool shifting means.

7. An automatic tool changer according to any one of claims 2 to 6, wherein the main spindle (11) can be rotated by a spindle motor (6) fitted in the main spindle head (5), and wherein the motor has a rotor (7) integrally surrounding the main spindle (11).

## Patentansprüche

1. Automatischer Werkzeugwechsler für den Austausch eines Werkzeuges (61) durch ein anderes (66), wobei der Werkzeugwechsler aufweist:
eine Hauptspindel (11) mit einer inneren Bohrung (12),
ein Werkzeugfutter (15), das an einem offenen Ende (11a) der Hauptspindel (11) vorgesehen ist,
eine Mehrzahl von Werkzeugen (61-66),
eine Einrichtung zum Vorschieben der Werkzeuge in Richtung des offenen Endes der Hauptspindel,
**dadurch gekennzeichnet, daß** die Werkzeuge in der Bohrung (12) der Hauptspindel (11) so aufgenommen sind, daß die Werkzeuge (61-66) einzeln in Axialrichtung der Hauptspindel (11) gleitbar sind, wodurch die Einrichtung zum Vorschieben so betreibbar ist, daß ein erstes Werkzeug (61) in dem Werkzeugfutter (15) durch ein zweites Werkzeug (66) ersetzt wird, das in der Bohrung (12) der Hauptspindel (11) aufgenommen ist.

2. Automatischer Werkzeugwechsler nach Anspruch 1, **dadurch gekennzeichnet, daß** die hohle Hauptspindel (11) in einem Hauptspindelkopf (5) drehbar montiert ist,
ein zylindrisches Werkzeugmagazin (41) in die hohle Hauptspindel (11) eingesetzt ist, wodurch das Werkzeugmagazin (41) in dem Hauptspindelkopf (5) aufgenommen ist, das Werkzeugfutter (15) einen zylindrischen Werkzeughalter (17) und Einrichtungen zum Führen des Werkzeuges zu dem Werkzeughalter (17) aufweist,
die Werkzeuge (61-66) Schäfte (60) derselben Form haben, die in dem zylindrischen Werkzeugmagazin (41) aufgenommen sind, wobei die Werkzeuge (61-66) entlang des Umfanges des Magazines gleichmäßig beabstandet und einzeln relativ zum Magazin (41) in Axialrichtung gleitbar sind, und daß
der Werkzeugwechsler eine Werkzeugverschiebeeinrichtung (48-55) aufweist, die in dem Werkzeugmagazin angeordnet ist, wobei die Werkzeugverschiebeeinrichtung in der Weise wirksam ist, daß sie ein verwendetes Werkzeug (61) von dem Werkzeughalter (17) nach hinten zu dem Werkzeugmagazin (41) verschiebt und ein Austauschwerkzeug (66) von dem Werkzeugmagazin (41) nach vorn bewegt, bis die Spitze (66a) des Werkzeuges durch den Werkzeughalter (17) um eine vorbestimmte Länge vorsteht.

3. Automatischer Werkzeugwechsler nach Anspruch 2, wobei die Werkzeugverschiebeeinrichtung Gleitstäbe (48) aufweist, welche gleitbar in individuellen Führungsbohrungen (42) aufgenommen sind, die sich in Axialrichtung des Werkzeugmagazins (41) erstrecken, wobei Drähte bzw. Kabel (69) die hinteren Enden der einzelnen Werkzeuge (61-66) mit den vorderen Enden der Gleitstäbe (48) verbinden, wobei die Drähte (69) und die Werkzeuge (61-66) über Lager (67) relativ zueinander drehbar sind, weiterhin Rückholfedern (50) für das Zurückziehen der Gleitstäbe (48) in hintere Positionen aufweist und Einrichtungen (54) zum Vorschieben jedes Gleitstabes (48) nach vom gegen die jeweilige Rückholfeder (50), um zu bewirken, daß das Austauschwerkzeug sich in eine Position bewegt, wo es durch das Werkzeugfutter (15) gehalten wird.

4. Automatischer Werkzeugwechsler nach Anspruch 3, wobei die Werkzeugverschiebeeinrichtung Gleitstäbe (48) aufweist, die gleitbar individuellen Führungsbohrungen (42) aufgenommen sind, welche sich in axialer Richtung des Werkzeugmagazins (41) erstrecken, und wobei parallele Verbindungsglieder (81, 82) vorgesehen sind, welche die einzelnen Werkzeuge mit den Gleitstäben (48) verbinden.

5. Automatischer Werkzeugwechsler nach einem der Ansprüche 2 bis 4, wobei das Werkzeugfutter (15) eine Spannzange ist, die über eine Mutter (21) festgezogen oder gelöst wird, und die Mutter (21) an einer Drehung gehindert werden kann durch eine Befestigungseinrichtung (23, 28 oder 71, 72), welche an dem Hauptspindelkopf (5) angeordnet ist, während sie in axialer Richtung bewegbar bleibt.

6. Automatischer Werkzeugwechsler nach einem der Ansprüche 2 bis 5, wobei die Mehrzahl von Werkzeugen, die in dem Werkzeugmagazin (41) aufgenommen sind, in einer Kassette zusammen mit den Werkzeugverschiebeeinrichtungen enthalten sind.

7. Automatischer Werkzeugwechsler nach einem der Ansprüche 2 bis 6, wobei die Hauptspindel (11) durch einen Spindelmotor (6) gedreht werden kann, welcher in den Hauptspindelkopf (5) eingepaßt ist, und wobei der Motor einen Rotor (7) hat, der in einem Stück die Hauptspindel (11) umgibt.

## Revendications

1. Echangeur d'outils automatique pour remplacer un outil (61) par un autre (66), l'échangeur d'outils comprenant :
une broche principale (11) comportant un alésage interne (12);
un mandrin (15) disposé à une extrémité ouverte (11a) de la broche principale (11);
une pluralité d'outils (61 à 66);
un moyen pour pousser les outils vers l'extrémité ouverte de la broche principale,
caractérisé en ce que les outils sont logés dans l'alésage (12) de la broche principale (11) avec les outils (61 à 66) pouvant glisser individuellement dans l'axe de la broche principale (11), de manière que le moyen de poussée puisse être actionné pour remplacer un premier outil (61) dans le mandrin (15) par un second outil (66) logé dans l'alésage (12) de la broche principale (11).

2. Echangeur d'outils automatique selon la revendication 1, caractérisé en ce que :
la broche principale creuse (11) est montée à rotation dans une tête de broche principale (5);
un magasin d'outils cylindrique (41) est inséré dans la broche principale creuse (11) de manière que le magasin d'outils (41) soit logé dans la tête de broche principale (5);
le mandrin (15) comprend un porte-outil cylindrique (17) et un moyen pour guider un outil jusqu'au porte-outil (17);
les outils (61 à 66) comportent des tiges (60) de la même forme logées dans le magasin d'outils cylindrique (41) avec les outils (61 à 66) équidistants autour de la périphérie de celui-ci et pouvant glisser individuellement dans l'axe du magasin (41); et
l'échangeur d'outils comprend un moyen de déplacement d'outil (48 à 55) disposé dans le magasin d'outils, le moyen de déplacement d'outils servant à déplacer un outil en service (61) vers l'arrière, du porte-outil (17) au magasin d'outils (41) et à déplacer un outil de rechange (66) vers l'avant depuis le magasin d'outils (41) jusqu'à ce que la pointe (66a) de l'outil se projette à travers le porte-outil (17) sur une longueur prédéterminée.

3. Echangeur d'outils automatique selon la revendication 2, dans lequel le moyen de déplacement d'outils comprend des tiges de glissement (48) disposées de manière à glisser dans des alésages de guidage individuels (42) s'étendant axialement dans le magasin d'outils (41), des fils (69) reliant les extrémités arrière des outils individuels (61 à 66) aux extrémités avant des tiges de glissement (48) avec les fils (69) et les outils (61 à 66) pouvant tourner relativement grâce à des paliers (67), des ressorts de rappel (50) pour rétracter les tiges de glissement (48) jusqu'à des positions arrière, et un moyen (54) pour pousser chaque tige de glissement (48) vers l'avant contre le ressort de rappel respectif (50) pour amener l'outil de remplacement à se déplacer jusqu'à une position à laquelle il est maintenu par le mandrin (15).

4. Echangeur d'outils automatique selon la revendication 3, dans lequel le moyen de déplacement d'outil comprend des tiges de glissement (48) disposées de manière à glisser dans des alésages de guidage individuels (42) s'étendant axialement dans le magasin d'outils (41) et dans lequel des éléments parallèles (81, 82) relient les outils individuels aux tiges de glissement (48).

5. Echangeur d'outils automatique selon l'une quelconque des revendications 2 à 4, dans lequel le mandrin (15) est un mandrin de serrage serré ou desserré par un écrou (21) et l'écrou (21) peut être empêché de tourner par un moyen d'arrêt (23, 28 ou 71, 72) disposé à la tête de broche principale (5) tout en restant mobile axialement.

6. Echangeur d'outils automatique selon l'une quelconque des revendications 2 à 5, dans lequel la pluralité d'outils logés dans le magasin d'outils (41) sont contenus dans une cassette avec le moyen de déplacement d'outils.

7. Echangeur d'outils automatique selon l'une quelconque des revendications 2 à 6, dans lequel la broche principale (11) peut être tournée par un moteur de broche (6) emboîté dans la tête de broche principale (5), et dans lequel le moteur comporte un rotor (7) entourant intégralement la broche principale (11).
